# EUROPEAN PATENT SPECIFICATION

(11) **EP 0 325 295 B1**
(45) Date of publication and mention of the grant of the patent: **15.03.1995**
(21) Application number: 89101020.9
(22) Date of filing: 20.01.1989
(51) Int. Cl.: B29C 65/00, B29D 30/42, B29L 21/00

(54) **Automatic transverse splicing device for green elastomeric sheet material**
Automatische Querspleisseinrichtung für unvulkanisierte Elastomerfolien
Dispositif automatique pour la liaison transversale de feuilles en matière élastomère non vulcanisée

(30) Priority: 22.01.1988 IT 6703988
(43) Date of publication of application: 26.07.1989
(73) Proprietor: BRIDGESTONE/FIRESTONE, INC., Akron, Ohio 44317 (US)
(72) Inventor: Lippa, Roberto, I-00100 Roma (IT)
(74) Representative: Boggio, Luigi

(56) References cited:
- EP-A- 0 253 067
- FR-A- 1 230 082
- US-A- 2 409 571
- US-A- 2 487 149
- US-A- 2 955 640
- US-A- 4 722 132

## Description

The present invention relates to an automatic transverse splicing device for green elastomeric sheet material.

The device according to the present invention may be used to advantage for splicing strips of elastomeric sheet material, particularly relatively thick strips for manufacturing tires, along a transverse slicing line, and is substantially of the type disclosed in US-A-2955640, i. e. of the type comprising a number of blades arranged, in use, substantially perpendicular to, and facing a supporting surface for the material to be spliced and a splicing line, and grouped together, in axially-sliding manner to and from the supporting surface, into a deformable pack extending along the splicing line and having a first lateral surface facing the supporting surface; approaching means for enabling, in use, relative displacement of the pack and the supporting surface to and from an operative position wherein the material to be spliced is gripped between the pack and the supporting surface; and pressure means cooperating, in use, with a second surface of the pack opposite to said first surface for axially thrusting the blades towards the supporting surface.

For splicing two strip portions of green elastomeric sheet material, or the opposite ends of a single portion for forming a ring, the standard practice consists in forming opposed conjugate bevels along the two splice edges, which are then brought together and compressed mechanically.

It is an object of the present invention to provide a device, in particular a device of the type described above, enabling straightforward low-cost automatic splicing of the two bevelled edges, and such mechanical compression as to ensure optimum grip of the two edges with no need for adhesives or other additional material.

According to the present invention there is provided an automatic device for splicing green elastomeric sheet material along a predetermined transverse splicing line, the device being designed to cooperate with a surface supporting said material, and comprising a number of blades arranged, in use, substantially perpendicular to, and facing the supporting surface and the splicing line, and grouped together, in axially-sliding manner to and from the supporting surface, into a deformable pack extending along the splicing line and having a first lateral surface facing the supporting surface; approaching means for enabling, in use, relative displacement of the pack and the supporting surface to and from an operative position wherein the material to be spliced is gripped between the pack and the supporting surface; and pressure means cooperating, in use, with a second surface of the pack opposite to said first surface for axially thrusting the blades towards the supporting surface, characterised by the fact that the pressure means are progressive pressure applying means for successively applying a predetermined axial pressure on to the blades; each blade having a serrated bottom edge arranged at said first surface to come into contact with the material to be spliced.

Adventageous embodiments are characterised by subclaims 2 to 6.

A non-limiting embodiment of the present invention will be described by way of example with reference to the accompanying drawings, in which :
Fig.1 shows a side view of one embodiment of the splicing device according to the present invention;

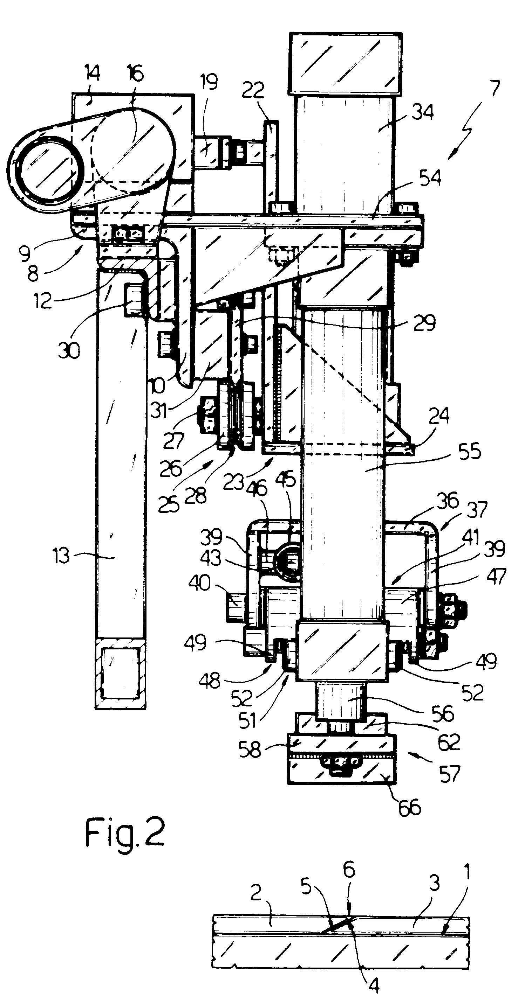

Fig.2 shows a section along line II-II in Fig.1;
Fig.3 shows a section along line III-III in Fig.1;
Fig.4 shows a section along line VI-VI in Fig.1;
Fig.5 shows a larger-scale, partially-exploded view in perspective of a detail in Fig.1.

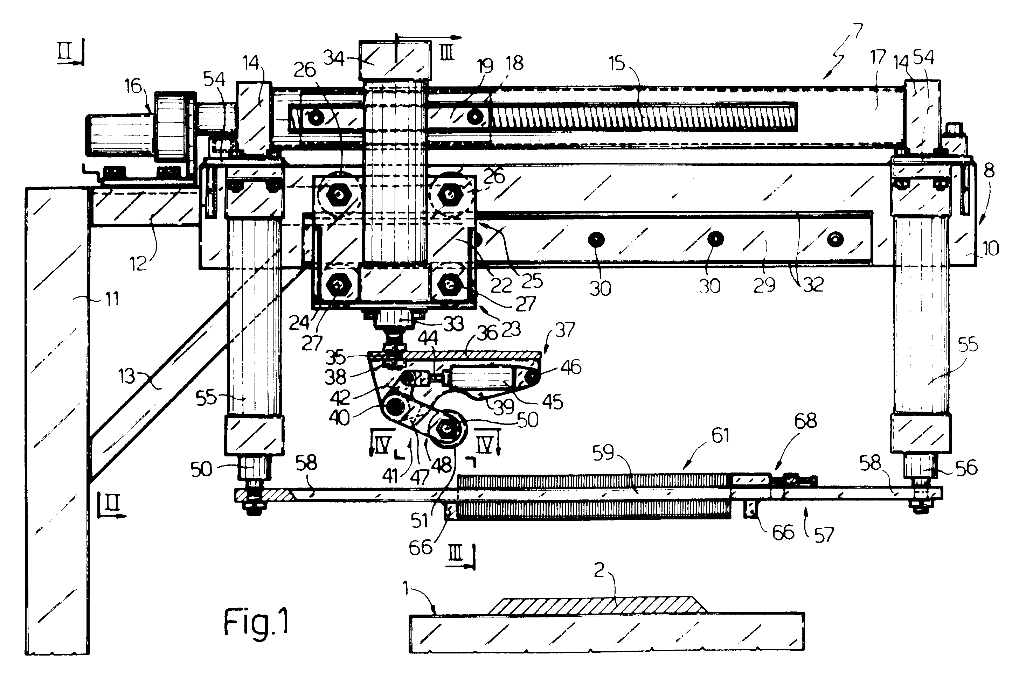

Number 1 in Fig.s 2 and 3 indicates a supporting surface for strips 2 and 3 of elastomeric material, substantially aligned perpendicular to the Fig.1 plane. Strips 2 and 3 present respective opposed transverse edges defined by respective conjugate beveled surfaces 4 and 5 contacting along a transverse splicing line 6.

Substantially over the said surface 1, there is provided an automatic transverse splicing device 7 comprising a crosspiece 8 having a substantially L-shaped section and extending parallel with line 6.

The said crosspiece 8 consists of a horizontal plate 9 and a front vertical core 10, and is supported in projecting manner, in the Fig.1 position, by an end pillar 11 connected to core 10 by a horizontal bar 12 (Fig.s 2 and 3) integral with the top of pillar 11 and connected to the same by a diagonal brace 13 extending between the mid point of bar 12 and crosspiece 8 and the mid point of pillar 11.

On top of each axial end, the said plate 9 presents a support 14 connected in rotary manner to a respective end of a screw 15 turned by a geared motor 16 supported on bracket 12, and housed inside a casing 17 extending between supports 14.

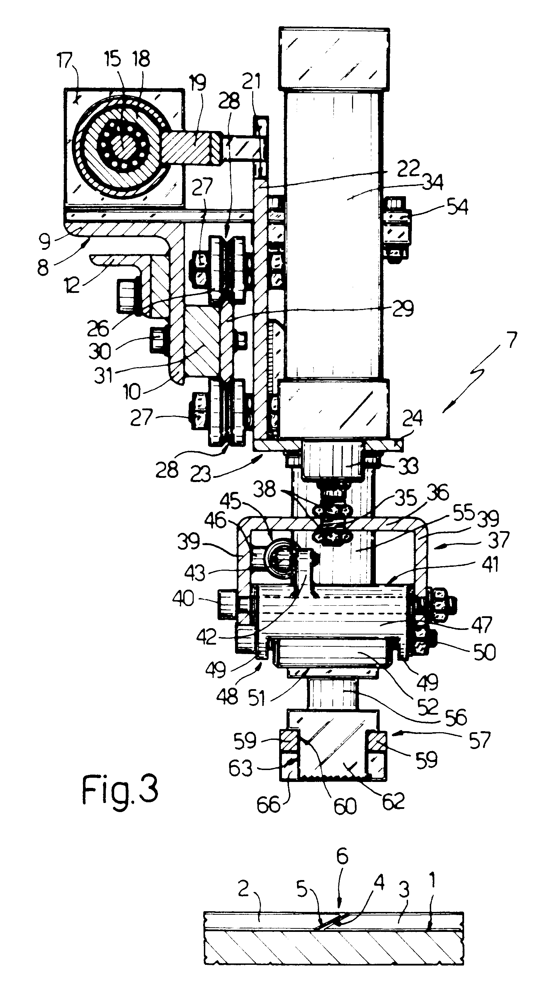

As shown, particularly in Fig. 1, screw 15 is connected to a nut screw 18 having a horizontal axial appendix 19 coming out of casing 17 through an axial slot 20, to which appendix 19 is connected in sliding manner. The free end of appendix 19 presents a pin engaging in sliding manner a vertical slot 21 (Fig. 3) formed on the top end of a vertical plate 22 parallel with core 10. Plate 22 constitutes a first arm of an L-shaped bracket 23, the second arm of which is formed by a plate 24 extending parallel with plate 9 from the bottom end of plate 22.

Bracket 23 forms part of a carriage 25 also comprisng two pairs of rollers 26, each mounted for rotation on a bolt 27 fitted through plate 22. Each roller 26 presents an intermediate annular groove 28, and the rollers in each pair of rollers 26 are arranged on opposite sides of a blade 29 lying in a plane parallel with plate 22 and extending substantially over the entire length of core 10 to which blade 29 is connected integral via bolts 30 and via the interposition of spacers 31 (Fig.s 2 and 3). Blade 29 presents opposite tapered side edges 32 (Fig. 1) engaging grooves 28 of rollers 26 and forming a fixed slideway for carriage 25.

As shown, particularly in Fig. 1, through a hole formed in plate 24, there extends a sliding manner a vertical rod 33 constituting the output member of a jack 34 arranged vertically over and integral with plate 24. From the free bottom end of rod 33, there extends axially downwards a threaded appendix 35 engaging a center through hole in a center plate 36 of a fork 37 rendered integral with appendix 35 by two nuts 38.

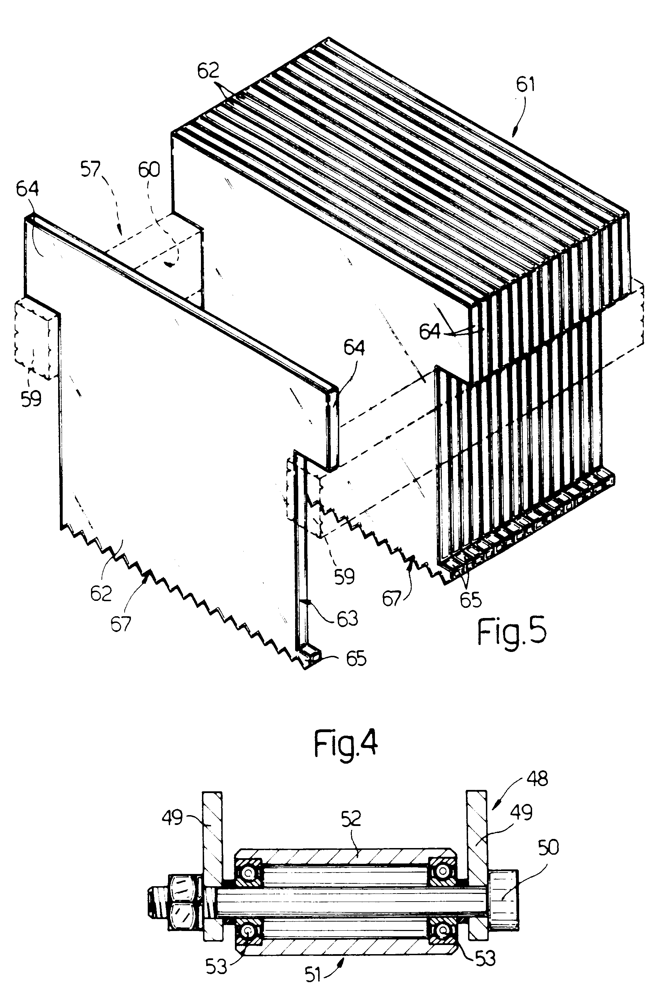

As shown, particlarly in Fig. 1, the said fork 37 comprises two lateral arms 39 fitted through with a bolt 40 perpendicular to arms 39 and to the Fig. 1 plane. A center portion of bolt 40 extending between arms 39 supports in rotary manner a rocker arm 41 designed to turn about the axis of bolt 40 in a plane parallel with the Fig. 1 plane. Rocker arm 41 comprises an upper arm 42 hinged, via a pin 43 parallel with bolt 40, to the free end of an output rod 44 of a damper 45 supported in rotary manner by one of arms 39 via pin 46 parallel with pin 43. Rocker arm 41 also comprises a lower arm 47, the free end of which consists of a fork 48 comprising two arms 49 fitted through with a bolt 50; the center portion of which bolt supports, as shown particularly in Fig. 4, a splicing roller 51 comprising a cylindrical jacket 52 integral with the outer ring of two bearings 53, the inner ring of which is fitted on to bolt 50.

As shown, particularly in Fig.s 1 and 2, between each support 14 and plate 9, there is gripped a plate 54 projecting from the same side of crosspiece 8 as carriage 25, and connected to the top end of a respective jack 55 having a downward-facing output rod 56.

As shown in Fig. 1, the said two rods 56 present threaded free ends to which are secured the opposite ends of a frame 57 extending over surface 1 and parallel with splicing line 6. Frame 57 comprises two coplanar, aligned, flat rectangular plates 58, the opposite ends of which are connected to rods 56, and the opposed ends of which are connected together by two parallel rods 59 defining a slot 60 engaged by a pack 61 of blades 62 lying in substantially vertical planes and perpendicular to both surface 1 and splicing line 6.

As shown in Fig. 5, each blade 62 is substantially rectangular in shape, and presents an intermediate portion having, along each vertical side edge, a recess 63 engaged by a respective rod 59 and defining, on one side, two projecting wings 64 and 65 extending outwards from the respective top and bottom ends of blade 62, and, on the other side, top wing 64 only. The width of the said intermediate portion presenting recesses 63 on each blade 62 is at most equal to the width of slot 60, whereas the height of recesses 63 is greater than the thickness of rods 59, so as to enable relatively ample vertical displacement (equal to the difference between the height of recesses 63 and the thickness of rods 59) of blades 62 in relation to frame 57.

With reference to Fig. 1, at each end of slot 60, frame 57 presents a supporting foot 66, the bottom end of which is substantially flush with the respective serrated bottom edges 67 of blades 62, when the said blades 62 are arranged with respective wings 64 resting on rods 59. At one end of slot 60, frame 57 also presents a gripping device 68 designed to grip blades 62 into a pack 61, while at the same time allowing the said blades 62 to slide vertically in relation to both one another and the said frame 57.

For assisting mutual vertical sliding of blades 62, each pair of adjacent blades 62 comprises a first blade preferably formed from metal, and a second blade formed from a material, e.g. plastic, having a low friction coefficient.

In actual use, for splicing the said two strips 2 and 3 along surfaces 4 and 5, the said two strips 2 and 3 are placed, with surfaces 4 and 5 contacting each other, beneath pack 61 in the Fig. 1 position. Jacks 55 are than activated so as to lower frame 57 in the direction of surface 1, and set feet 66 contacting surface 1 on opposite sides of splicing line 6. With frame 57 so positioned, the respective serrated edges 67 of blades 62 contact the upper surface of strip 2 over the said surfaces 4 and 5, and blades 62 slide axially in relation to one another so as to trace the exact transverse profile of strips 2 and 3 on line 6.

At this point, jack 34 is activated so as to bring roller 51 into contact with the upper surface of pack 61 and exert on the same a predetermined pressure controlled by both jack 34 and damper 45, and screw 15 is activated so as to move carriage 25 forward and back along blade 29. During such displacement, roller 51 operates selectively and successively on blades 62, by sbjecting each of the same to axial pressure for pressing together the said surfaces 4 and 5.

During each stroke of roller 51 over the upper surface of pack 61, each point along splicing line 6 is therefore subjected to localised compression, which is enhanced by the serrated design of respective edges 67 of blades 62, and the effect of which is to merge the elastomeric material of strips 2 and 3, not only perpendicularly in relation to surface 1, but also transversely, thus providing for optimum mechanical grip of surfaces 4 and 5 of strips 2 and 3.

## Claims

1. An automatic device (7) for splicing green elastomeric sheet material along a predetermined transverse splicing line (6), the device (7) being designed to cooperate with a surface (1) supporting said material, and comprising a number of blades (62) arranged, in use, substantially perpendicular to, and facing the supporting surface (1) and the splicing line (6), and grouped together, in axially-sliding manner to and from the supporting surface (1), into a deformable pack (61) extending along the splicing line (6) and having a first lateral surface facing the supporting surface (1); approaching means (55) for enabling, in use, relative displacement of the pack (61) and the supporting surface (1) to and from an operative position wherein the material to be spliced is gripped between the pack (61) and the supporting surface (1); and pressure means (51) cooperating, in use, with a second surface of the pack (61) opposite to said first surface for axially thrusting the blades (62) towards the supporting surface (1), characterised by the fact that the pressure means (51) are progressive pressure applying means for successively applying a predetermined axial pressure on to the blades (62); each blade (62) having a serrated bottom edge (67) arranged at said first surface to come into contact with the material to be spliced.

2. A device as claimed in Claim 1, characterised by the fact that the said pressure means comprise a splicing roller (51) arranged facing the said second surface; guide means (29) extending parallel with the said splicing line (6); slide means (25) supporting the said splicing roller (51) and designed to travel along the said guide means (29); first actuating means (34) located between the said slide means (25) and the said splicing roller (51) for moving the said splicing roller (51) to and from an operative position wherein it contacts, with predetermined pressure, the said second surface of the said pack (61); and second actuating means (15, 16, 18) for moving the said slide means (25) in reciprocating manner along the said guide means (29), so as to cause the said splicing roller (51), when in the said operative position, to operate successively on the said blades (62) and push the same towards the said supporting surface (1).

3. A device as claimed in Claim 1 or 2, characterised by the fact that the said approach means comprise a frame (57) supporting the said pack (61) of blades (62); and further actuating means (55) for moving the said frame (57) to and from an operative position contacting the said supporting surface (1); the said blades (62) being connected to the said frame (57) in such a manner as to slide axially in relation to the same.

4. A device as claimed in any one of the foregoing Claims, characterised by the fact that one of each pair of adjacent said blades (62) is formed from material having a low friction coefficient.

5. A device as claimed in Claim 3 or 4, characterised by the fact that the said frame (57) comprises two rods (59) parallel with each other and with the said splicing line (6), which rods (59) define a slot (60) across which the said blades (62) in the said pack (61) extend in axially-sliding manner; each said blade (62) presenting an intermediate portion of at most the same width as the said slot (60), and having upper lateral wings (64) for its own support on the said rods (59); the length of the said intermediate portion being greater than the thickness of the said rods (59).

6. A device as claimed in any one of the foregoing Claims from 2 to 5, characterised by the fact that it comprises a rocker arm (41) hinged to a pivot (40) perpendicular to the said splicing line (6) and parallel with the said supporting surface (1); the said pivot (40) being designed to move, by virtue of the said first actuating means (34), to and from the said supporting surface (1); the said roller (51) being supported in rotary manner by a first arm (47) on the said rocker arm (41), and damping means (45) being connected to a second arm (42) on the said rocker arm (41), for controlling rotation of the same about the said pivot (40).

## Patentansprüche

1. Automatische Einrichtung (7) zum Querspleissen unvulkanisierter Elastomerfolien entlang einer vorbestimmten querverlaufenden Spleisslinie (6), wobei die Einrichtung (7) ausgelegt ist, um mit einer Fläche (1) zusammenzuarbeiten, die die Folie bzw. das Material trägt und eine Anzahl von Blättern (62) aufweist, die im Gebrauch im wesentlichen senkrecht zur Tragfläche (1) und zur Spleisslinie (6) angeordnet sind und dieser gegenüberliegen und gemeinsam in axial verschiebender Weise und die Tragfläche (1) zu und von ihr weg in einem deformierbaren Paket (61) gruppiert sind, das sich entlang der Spleisslinie (6) erstreckt und eine erste seitliche Fläche besitzt, die der Tragfläche (1) gegenüberliegt, sowie Näherungsmittel (55), die im Gebrauch die relative Verschiebung des Pakets (61) und der Tragfläche (1) in eine Betriebsposition hinein und aus ihr heraus ermöglichen, wobei die zu spleissende Folie/Material zwischen dem Paket (61) und der Tragfläche (1) eingeklemmt wird, und wobei Druckmittel (51) im Gebrauch mit einer zweiten Fläche des Pakets (61), die der ersten Fläche gegenüberliegt, zusammenarbeiten, um die Blätter (62) axial in Richtung auf die Tragfläche (1) zu drücken, dadurch gekennzeichnet, daß die Druckmittel (51) Stufendruck ausübende Mittel sind, um aufeinanderfolgend einen vorbestimmten Axialdruck auf die Blätter (62) auszuüben, wobei jedes Blatt (62) eine Sägezahn-Bodenkante (67) besitzt, die an der genannten ersten Fläche angeordnet ist, um mit der zu spleissenden Folie/Material in Kontakt zu gelangen.

2. Einrichtung nach Anspruch 1, dadurch gekennzeichnet, daß die Druckmittel eine Spleisswalze (51) umfassen, die der zweiten Fläche gegenüberliegend angeordnet ist, sowie Führungsmittel (29), die sich parallel zur Spleisslinie (6) erstrecken, Schlitten (25), die die Spleisswalze bzw. -rolle (51) tragen und ausgelegt sind, sich entlang der Führungsmittel (29) zu bewegen, erste Betätigungsmittel (34), die zwischen dem Schlitten (25) und der Spleisswalze (51) angeordnet sind, um die Spleisswalze (51) in eine Betriebsposition hinein- und aus ihr herauszubewegen, wobei sie mit vorbestimmten Druck die zweite Fläche des Pakets (61) berührt und wobei zweite Betätigungsmittel (15, 16, 18) vorgesehen sind, um den Schlitten (25) entlang der Führungsmittel (29) hin- und herzubewegen, so daß die Spleisswalze (51), wenn sie in ihrer Betriebsposition ist, nacheinander auf den Blättern (62) arbeitet und dieselben in Richtung auf die Tragfläche (1) drückt.

3. Einrichtung nach Anspruch 1 oder 2, dadurch gekennzeichnet, daß die Nährungsmittel einen Rahmen (57) umfassen, der das Paket (61) an Blätter (62) trägt, und daß ferner Betätigungsmittel (55) vorgesehen sind, um den Rahmen (57) in eine Betriebsposition hinein, in der er die Tragfläche (1) berührt, und aus ihr herauszubewegen, wobei die Blätter (62) mit dem Rahmen (57) in solcher Weise verbunden sind, daß sie in axialer Beziehung zu demselben gleiten.

4. Einrichtung nach irgendeinem der vorstehenden Ansprüche, dadurch gekennzeichnet, daß ein Blatt (62) jedes benachbarten Blätterpaares aus einem Material geformt ist, das einen niedrigen Reibungskoeffizienten besitzt.

5. Einrichtung nach Anspruch 3 oder 4, dadurch gekennzeichnet, daß der Rahmen (57) zwei Stangen (59) umfaßt, die parallel zueinander und zur Spleisslinie (6) verlaufen, wobei die Stangen (59) einen Schlitz (60) bilden, über den die Blätter (62) in jedem Paket (61) in axial verschiebender Weise bewegen, wobei jedes Blatt (62) einen Zwischenteil bildet, der maximal die gleiche Breite wie der Schlitz (60) besitzt und obere seitliche Flügel (64) zu seinem eigenen Abstützen auf den Stangen (59) aufweist, und wobei die Länge des Zwischenteils größer ist als die Dicke der Stangen (59).

6. Einrichtung nach irgendeinem der vorstehenden Ansprüche 2 bis 5, dadurch gekennzeichnet, daß sie einen Schwinghebel (41) umfaßt, der um ein Scharnier (40) senkrecht zur Spleisslinie (6) und parallel zur Tragfläche (1) drehbar ist, und daß der Schwenkpunkt/Scharnier (40) so ausgelegt ist, daß er sich durch das erste Betätigungsmittel (34) auf die Tragfläche (1) zu- und von ihr wegbewegt, und wobei die Walze (51) in drehbarer Weise durch einen ersten Arm (47) auf dem Schwinghebel (41) gelagert ist und wobei Dämpfungsmittel (45) mit einem zweiten Arm (42) auf dem Schwinghebel (41) verbunden sind, um die Rotation desselben um das Scharnier (40) zu steuern.

## Revendications

1. Dispositif automatique (7) de soudure de matière en feuille en élastomère non vulcanisé le long d'une ligne prédéterminée transversale de soudure (6), le dispositif (7) étant conçu pour coopérer avec une surface (1) qui supporte ladite matière et comprenant plusieurs lames (62) disposées, en service, sensiblement perpendiculairement à et en face de la surface de support (1) et de la ligne de soudure (6) et groupées, de manière à coulisser axialement pour se rapprocher et s'éloigner de la surface de support (1), en un paquet déformable (61) disposé le long de la ligne de soudure (6) et ayant une première surface latérale qui est en face de la surface de support (1) ; un moyen de rapprochement (55) pour permettre, en service, un déplacement relatif du paquet (61) et de la surface de support (1) de façon qu'ils se rapprochent et s'éloignent d'une position active dans laquelle la matière devant être soudée est serrée entre le paquet (61) et la surface de support (1) ; et un moyen (51) d'exercice d'une pression coopérant, en service, avec une seconde surface du paquet (61) qui est du côté opposé de celui de ladite première surface afin de pousser axialement les lames (62) vers la surface de support (1), caractérisé par le fait que les moyens (51) d'exercice d'une pression sont des moyens d'exercice progressif de pression pour exercer successivement une pression axiale prédéterminée sur les lames (62) ; chaque lame (62) ayant un bord inférieur dentelé (67), disposé sur ladite première surface, pour entrer en contact avec la matière devant subir la soudure.

2. Dispositif selon la revendication 1, caractérisé par le fait que ledit moyen d'exercice d'une pression comprend un rouleau de soudage (51) disposé en face de ladite seconde surface ; un moyen de guidage (29) orienté parallèlement à ladite ligne de soudage (6) ; un moyen de coulissement (25) supportant ledit rouleau de soudage (51) et conçu pour se déplacer le long dudit moyen de guidage (29) ; un premier moyen d'actionnement (34) placé entre ledit moyen de coulissement (25) et ledit rouleau de soudage (51) pour rapprocher et éloigner ledit rouleau de soudage (51) d'une position active à laquelle il entre en contact avec une pression prédéterminée avec ladite seconde surface dudit paquet (61) ; et des seconds moyens d'actionnement (15, 16, 18) destinés à déplacer ledit moyen de coulissement (25) de manière alternative le long dudit moyen de guidage (29) de façon à faire agir ledit rouleau de soudage (51), lorsqu'il occupe ladite position active, successivement sur lesdites lames (62) et à pousser celles-ci vers ladite surface de support (1).

3. Dispositif selon la revendication 1 ou 2, caractérisé par le fait que ledit moyen de rapprochement comprend un châssis (57) supportant ledit paquet (61) de lames (62) ; et qu'un autre moyen d'actionnement (55) est destiné à rapprocher et à éloigner ledit châssis (57) d'une position active de contact avec ladite surface de support (1) ; lesdites lames (62) étant assemblées audit châssis (57) de manière à glisser axialement par rapport à celui-ci.

4. Dispositif selon l'une quelconque des revendications précédentes, caractérisé par le fait que l'une de chaque paire desdites lames voisines (62) est réalisée en une matière ayant un faible coefficient de frottement.

5. Dispositif selon la revendication 3 ou 4, caractérisé par le fait que ledit châssis (57) comprend deux barres (59) qui sont parallèles l'une à l'autre et à ladite ligne de soudage (6), lesdites barres (59) délimitant une fente (60) dans laquelle lesdites lames (62) dudit paquet (61) sont placées de manière coulissante axialement ; chacune desdites lames (62) comportant une partie intermédiaire ayant au maximum la même largeur que celle de ladite fente (60) et ayant des ailes supérieures latérales (64) pour leur propre support sur lesdites barres (59) ; la longueur de ladite partie intermédiaire étant supérieure à l'épaisseur desdites barres (59).

6. Dispositif selon l'une quelconque des revendications précédentes 2 à 5, caractérisé par le fait qu'il comprend un bras oscillant (41) articulé sur un pivot (40) perpendiculaire à ladite ligne de soudage (6) et parallèle à ladite surface de support (1) ; ledit pivot (40) étant conçu pour se rapprocher et s'éloigner de ladite surface de support (1) sous l'effet dudit premier moyen d'actionnement (34) ; ledit rouleau (51) étant supporté de manière rotative par un premier bras (47) dudit bras oscillant (41) et un moyen d'amortissement (45) étant relié à un second bras (42) dudit bras oscillant (41) pour commander la rotation de celui-ci autour dudit pivot (40).
